# EUROPEAN PATENT SPECIFICATION

(11) **EP 1 765 957 B1**
(45) Date of publication and mention of the grant of the patent: **30.11.2011**
(21) Application number: 05751818.5
(22) Date of filing: 19.05.2005
(51) Int. Cl.: C10G 9/16, C10G 9/20

(54) **PROCESS AND APPARATUS FOR REMOVING COKE FORMED DURING STEAM CRACKING OF HYDROCARBON FEEDSTOCKS CONTAINING RESIDS**
VERFAHREN UND VORRICHTUNG ZUR ENTFERNUNG VON BEIM STEAMCRACKEN VON RESIDUA ENTHALTENDEN KOHLENWASSERSTOFF-EINSATZSTOFFEN GEBILDETEM KOKS
PROCEDE ET APPAREIL PERMETTANT D'OTER DE LA COKE FORMEE AU COURS DU VAPOCRAQUAGE DE CHARGES D'HYDROCARBURES CONTENANT DES RESIDUS

(30) Priority: 21.05.2004 US 851487; 21.05.2004 US 851486; 21.05.2004 US 851546; 21.05.2004 US 851878; 21.05.2004 US 851494; 21.05.2004 US 851434; 21.05.2004 US 851495; 21.05.2004 US 851730; 21.05.2004 US 851500; 21.05.2004 US 573474 P; 14.07.2004 US 891795; 14.07.2004 US 891981; 16.07.2004 US 893716; 28.10.2004 US 975703; 10.12.2004 US 9661
(43) Date of publication of application: 28.03.2007
(73) Proprietor: ExxonMobil Chemical Patents Inc., Baytown, TX 77520-2101 (US)
(72) Inventor: STELL, Richard, C., Houston, TX 77062 (US); DI NICOLANTONIO, Arthur, R., Seabrook, TX 77586 (US); FRYE, James, M., Houston, TX 77044 (US); Annamalai, Subramanian, Houston, TX 77058 (US); VIDONIC, Nicholas, G., Seabrooks, TX 77586 (US)
(74) Representative: Gerstberger, Gisela
(86) International application number: PCT/US2005/017695
(87) International publication number: WO 2005/113721

(56) References cited:
- US-A- 4 954 247
- US-A- 5 190 634
- US-A1- 2004 004 022

## Description

### FIELD OF THE INVENTION

The present invention relates to the cracking of hydrocarbons that contain relatively non-volatile hydrocarbons and other contaminants. More particularly, the present invention relates to reducing coking in apparatus used for cracking hydrocarbons.

### BACKGROUND OF THE INVENTION

Steam cracking, also referred to as pyrolysis, has long been used to crack various hydrocarbon feedstocks into olefins, preferably light olefins such as ethylene, propylene, and butenes. Conventional steam cracking utilizes a pyrolysis furnace which has two main sections: a convection section and a radiant section. The hydrocarbon feedstock typically enters the convection section of the furnace as a liquid (except for light feedstocks which enter as a vapor) wherein it is typically heated and vaporized by indirect contact with hot flue gas from the radiant section and by direct contact with steam. The vaporized feedstock and steam mixture is then introduced into the radiant section where the cracking takes place. The resulting products including olefins leave the pyrolysis furnace for further downstream processing, including quenching.

Pyrolysis involves heating the feedstock sufficiently to cause thermal decomposition of the larger molecules. The pyrolysis process, however, produces molecules which tend to combine to form high molecular weight materials known as tar. Tar is a high-boiling point, viscous, reactive material that can foul equipment under certain conditions. In general, feedstocks containing higher boiling materials tend to produce greater quantities of tar.

The formation of tar after the pyrolysis effluent leaves the steam cracking furnace can be minimized by rapidly reducing the temperature of the effluent exiting the pyrolysis unit to a level at which the tar-forming reactions are greatly slowed. This cooling which may be achieved in one or more steps and using one or more methods is referred to as quenching.

Conventional steam cracking systems have been effective for cracking high-quality feedstock which contain a large fraction of light volatile hydrocarbons, such as gas oil and naphtha. However, steam cracking economics sometimes favor cracking lower cost heavy feedstocks such as, by way of non-limiting examples, crude oil and atmospheric residue. Crude oil and atmospheric residue often contain high molecular weight, non-volatile components with boiling points in excess of 1100°F (590°C) otherwise known as resids. The non-volatile components of these feedstocks lay down as coke in the convection section of conventional pyrolysis furnaces. Only very low levels of non-volatile components can be tolerated in the convection section downstream of the point where the lighter components have fully vaporized.

In most commercial naphtha and gas oil crackers, cooling of the effluent from the cracking furnace is normally achieved using a system of transfer line heat exchangers, a primary fractionator, and a water quench tower or indirect condenser. The steam generated in transfer line exchangers can be used to drive large steam turbines which power the major compressors used elsewhere in the ethylene production unit. To obtain high energy-efficiency and power production in the steam turbines, it is necessary to superheat the steam produced in the transfer line exchangers.

Cracking heavier feeds, such as kerosenes and gas oils, produces large amounts of tar, which lead to rapid coking in the radiant section of the furnace as well as fouling in the transfer line exchangers preferred in lighter liquid cracking service.

Additionally, during transport some naphthas are contaminated with heavy crude oil containing non-volatile components. Conventional pyrolysis furnaces do not have the flexibility to process residues, crudes, or many residue-or crude-contaminated gas oils or naphthas which are contaminated with non-volatile components.

To address coking problems, U.S. Patent 3,617,493, discloses the use of an external vaporization drum for the crude oil feed and discloses the use of a first flash to remove naphtha as vapor and a second flash to remove vapors with a boiling point between 450 and 1100°F (230 and 590°C). The vapors are cracked in the pyrolysis furnace into olefins and the separated liquids from the two flash tanks are removed, stripped with steam, and used as fuel.

U.S. Patent 3,718,709, discloses a process to minimize coke deposition. It describes preheating of heavy feedstock inside or outside a pyrolysis furnace to vaporize about 50% of the heavy feedstock with superheated steam and the removal of the residual, separated liquid. The vaporized hydrocarbons, which contain mostly light volatile hydrocarbons, are subjected to cracking. Periodic regeneration above pyrolysis temperature is effected with air and steam.

U.S. Patent 5,190,634, discloses a process for inhibiting coke formation in a furnace by preheating the feedstock in the presence of a small, critical amount of hydrogen in the convection section. The presence of hydrogen in the convection section inhibits the polymerization reaction of the hydrocarbons thereby inhibiting coke formation.

U.S. Patent 5,580,443 discloses a process wherein the feedstock is first preheated and then withdrawn from a preheater in the convection section of the pyrolysis furnace. This preheated feedstock is then mixed with a predetermined amount of steam (the dilution steam) and is then introduced into a gas-liquid separator to separate and remove a required proportion of the non-volatiles as liquid from the separator. The separated vapor from the gas-liquid separator is returned to the pyrolysis furnace for heating and cracking.

US 2004/0004022 A1 describes an advantageously controlled process to optimize the cracking of volatile hydrocarbons contained in the heavy hydrocarbon feedstocks and to reduce and avoid coking problems. It provides a method to maintain a relatively constant ratio of vapor to liquid leaving the flash by maintaining a relatively constant temperature of the stream entering the flash. More specifically, the constant temperature of the flash stream is maintained by automatically adjusting the amount of a fluid stream mixed with the heavy hydrocarbon feedstock prior to the flash. The fluid can be water.

WO 2005/095548 describes a process for cracking heavy hydrocarbon feedstock which mixes heavy hydrocarbon feedstock with a fluid, e.g., hydrocarbon or water, to form a mixture stream which is flashed to form a vapor phase and a liquid phase, the vapor phase being subsequently cracked to provide olefins, and the product effluent cooled in a transfer line exchanger, wherein the amount of fluid mixed with the feedstock is varied in accordance with a selected operating parameter of the process, e.g., temperature of the mixture stream before the mixture stream is flashed.

In using a flash to separate heavy liquid hydrocarbon fractions from the lighter fractions which can be processed in the pyrolysis furnace, it is important to effect the separation so that most of the non-volatile components will be in the liquid phase. Otherwise, heavy, coke-forming non-volatile components in the vapor are carried into the furnace causing coking problems. However, the flashing in a flash/separation vessel is typically accompanied by coking of internal surfaces in and proximally downstream of the vessel. The extent of such coking is dependent upon various factors including feed type, preheating protocol, and design of the vessel. Liquids contacting the internal surfaces of the vessel and downstream equipment provide coatings of films that are precursors to coke. Excessive temperatures, such as above 427°C (800°F), typically from 450 to 460°C (840 to 860°F) or from 510 to above 621°C (950 to 1150°F), depending on the feedstock, are theorized to lead to excessive coke formation by thermal cracking and heat soaking of the heavy end of the heavy hydrocarbon feedstock stream. Because this coke buildup can effect restriction and increase pressure drop within the overall process, it would be advantageous to control the buildup within the flash zone and immediately downstream of the flash zone.

### SUMMARY OF THE INVENTION

The present invention relates to a process for removing coke formed during cracking of a hydrocarbon feedstock containing resid and coke precursors. The process comprises (a) heating the hydrocarbon feedstock; (b) mixing the heated hydrocarbon feedstock with a primary dilution steam stream to form a mixture stream containing coke precursors; (c) flashing the mixture stream in a flash/separation vessel to form a coke precursor depleted vapor phase and a coke precursor rich liquid phase; (d) removing the liquid phase through a bottom outlet and vapor phase with a trace of condensed vapor phase through an overhead outlet in the flash/separation vessel, which vessel comprises internal surfaces and associated outlet piping, which surfaces and piping become coated during operation with said liquid phase and/or condensed vapor phase and thereafter at least partially coked; (e) cracking the vapor phase in a radiant section of a pyrolysis furnace to produce an effluent comprising olefins, the pyrolysis furnace comprising a radiant section and a convection section; (f) quenching the effluent and recovering cracked product therefrom; and (g) determining the level of coking in the flash/separation vessel or in piping immediately downstream of said flash/separation vessel, and when a predetermined upper coke level is reached (i) interrupting flow of the hydrocarbon feedstock containing resid and coke precursors to the flash/separation vessel, (ii) purging the flash/separation vessel with steam under conditions sufficient to substantially remove the vapor phase from the vessel and the liquid phase from the internal surfaces and/or outlet piping, (iii) introducing an air/steam mixture through the flash/separation vessel under conditions sufficient to at least partially combust coke on the internal surfaces and outlet piping, and (iv) restarting the flow of the hydrocarbon feedstock to the flash/separation vessel when a predetermined lower coke level on the internal surfaces and/or outlet piping is reached.

In an embodiment of this aspect of the present invention, the flash/separation vessel comprises a baffle positioned above the liquid outlet which carries liquid outward and from the center of the vessel and downward. Typically, the baffle can be of any suitable shape, e.g., a substantially conical baffle whose apex points up, effecting the desired flow of liquid outward and downward. The baffle can be perforated, typically comprising perforations substituting for at least 1% of the total surface area of a corresponding unperforated baffle. In another embodiment of this aspect of the present invention, the flash/separation vessel is substantially cylindrical. The mixture stream is introduced to the flash/separation vessel in a suitable manner, typically, by introducing the mixture stream (i) tangentially through at least one side inlet located in the side of the vessel, (ii) radially through at least one side inlet located in the side of the vessel, (iii) through the top of the vessel, and/or (iv) through the bottom of the vessel, and the vapor phase is removed through an overhead outlet of the vessel. In one embodiment, the mixture stream is introduced tangentially to the flash/separation vessel through at least one side inlet located in the side of said vessel, while the vapor phase is removed through an overhead outlet of the vessel.

In still another embodiment of the present invention, purging steam is introduced through at least one side inlet of the flash/separation vessel. The purging steam is typically introduced to the flash/separation vessel at a temperature ranging from 400 to 550°C (750 to 1025°F), a total pressure ranging from 0 to 830 kPag (0 to 120 psig), and a total flow of steam equal 5 to 250 times the volume of the flash/separator vessel.

In another embodiment, purging steam is introduced to the flash/separation vessel at a temperature ranging from 450 to 510°C (840 to 950°F), a total pressure ranging from 350 to 700 kPag (from about 50 to about 100 psig), and a total purge steam volume equal to 100 to 200 times the volume of the flash/separator vessel.

In yet another embodiment of this aspect of the present invention, the air/steam mixture stream is introduced through at least one side inlet of the flash/separation vessel. The air/steam mixture stream is characterized by an air/steam weight ratio ranging from 0.01 to 0.5, preferably from about 0.05 to about 0.2.

In another embodiment of this aspect, a major portion of the air/steam mixture is removed from the flash/separation vessel as an overhead stream and a minor portion of the air/steam mixture is removed from said flash/separation vessel as a bottoms slipstream. The minor portion is typically at least 2% of the total air/steam mixture, typically ranging from 5% to 10% of the total air/steam mixture. In yet another embodiment, the amount of the air/steam mixture removed as a bottoms slipstream is controlled by at least one of a flow valve associated with the bottom outlet and one or more restriction orifices in the piping associated with the bottom outlet. The air/steam mixture is typically introduced to the flash/separation vessel under conditions sufficient to combust coke while limiting the adiabatic flame temperatures to no greater than the design temperature of the flash/separation vessel said bottoms slipstream piping. Typical design temperature ranges from 570 to 615°C (1060 to 1140°F).

The air/steam weight ratio of the air/steam mixture is typically maintained at no greater than 0.2 during decoking of easily combusted coke, and at no greater than 0.5 after decoking.

In one embodiment of this aspect of the present invention, the process further comprises monitoring internal temperature of the flash/separation vessel and controlling the air/steam weight ratio as a function of the internal temperature. This monitoring can be carried out by any suitable method known in the art. Typically, the monitoring is carried out by means of a thermocouple associated with the inside of the flash/separation vessel. The process can further comprise monitoring the bottoms slipstream temperature of the flash/separation vessel and controlling the air/steam weight ratio as a function of the internal temperature.

In another embodiment, the monitoring is carried out by means of a surface thermocouple attached to the outside of the bottom of the flash/separation vessel or the piping immediately downstream of the flash/separation vessel.

In yet another embodiment, monitoring is carried out by analyzing the flue gas produced during air/steam decoking for CO/CO₂.

In another aspect, the present invention relates to an apparatus for cracking a hydrocarbon feedstock containing resid and coke precursors, comprising (a) a heating zone for heating the hydrocarbon feedstock to provide heated hydrocarbon feedstock; (b) a mixing zone for mixing a primary dilution steam stream with the heated hydrocarbon feedstock to provide a mixture stream containing coke precursors; (c) a flash/separation vessel for flashing the mixture stream to form a coke precursor depleted vapor phase and a coke precursor rich liquid phase, the vessel comprising (i) a bottom outlet which comprises internal surfaces and associated outlet piping, which surfaces and piping during operation become coated with the liquid phase and thereafter at least partially coked; (ii) an overhead outlet for removing the vapor phase and a trace of condensed vapor phase, which overhead outlet comprises internal surfaces and associated outlet piping, which surfaces and piping during operation become coated with condensed vapor phase and thereafter at least partially coked; (iii) an inlet for introducing sufficient purging steam to the flash/separation vessel to remove the vapor phase from the vessel and the liquid phase from the internal surfaces and/or outlet piping; and (iv) an inlet for introducing an air/steam mixture through the flash/separation vessel under conditions sufficient to at least partially combust coke on the internal surfaces and/or outlet piping; (d) a pyrolysis furnace comprising a convection section, and a radiant section for cracking the vapor phase to produce an effluent comprising olefins; (e) a means for quenching the effluent; (f) a recovery train for recovering cracked product from the quenched effluent, (g) a means for determining the level of coking in the flash/separation vessel and/or in the associated outlet piping; and (h) a control valve for controlling the flow of the hydrocarbon feedstock with resid and coke precursors to the flash/separation vessel.

In one embodiment of this aspect of the invention, the flash/separation vessel comprises a baffle positioned above the liquid outlet. Typically, the baffle is a substantially conical baffle whose apex points upward, e.g., a perforated, substantially conical baffle. The perforations can make up at least 1% of its total surface area.

In another embodiment of this aspect, the flash/separation vessel is substantially cylindrical.

In yet another embodiment, the flash/separation vessel contains a means to monitor its internal temperature. Typically, any suitable means for monitoring the internal temperature can be used, e.g., one that comprises a thermocouple mounted within the flash/separation vessel.

In still another embodiment of this aspect of the invention, the flash/separation vessel further comprises at least one side inlet for tangentially introducing the mixture stream. The purging steam and/or the air/steam mixture stream can be introduced through the at least one side inlet.

In still yet another embodiment of this aspect of the invention, the apparatus further comprises a means to monitor the bottom outlet temperature. Typically, any suitable means for monitoring the internal temperature can be used, e.g., the monitoring means can comprise a surface thermocouple attached to the outside of the bottom of the flash/separation vessel or the outlet piping immediately downstream of the flash/separation vessel.

In another embodiment of this aspect of the present invention, the apparatus further comprises a means to control air/steam weight ratio of the air/steam mixture stream as a function of the internal temperature and the bottom outlet temperature.

### BRIEF DESCRIPTION OF THE DRAWING

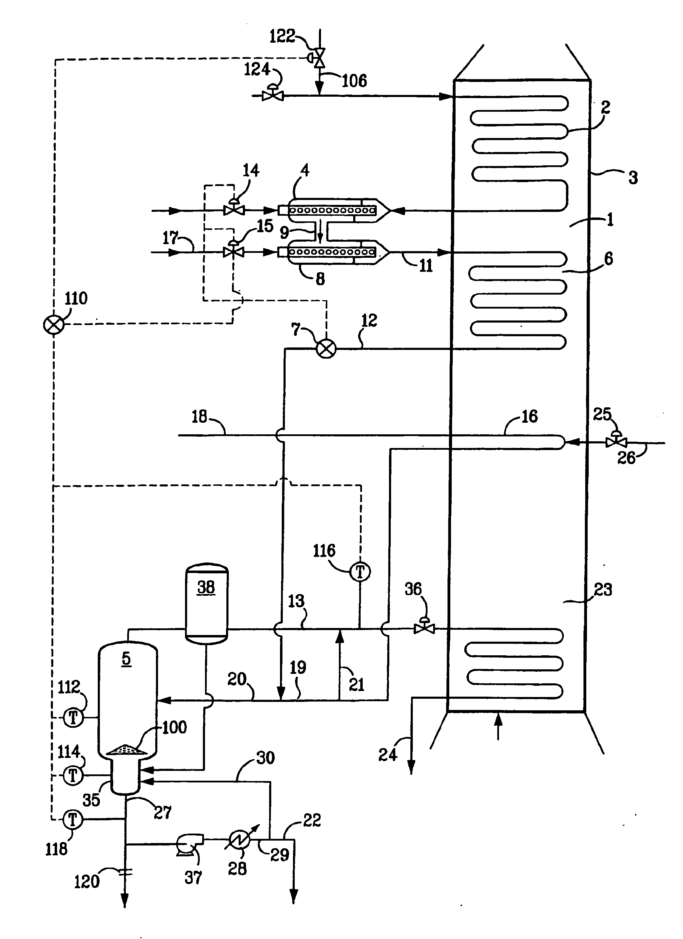

Figure 1 illustrates a schematic flow diagram of the overall process and apparatus in accordance with the present invention employed with a pyrolysis furnace.

### DETAILED DESCRIPTION OF THE INVENTION

Unless otherwise stated, all percentages, parts, ratios, etc., are by weight. Unless otherwise stated, a reference to a compound or component includes the compound or component by itself, as well as in combination with other compounds or components, such as mixtures of compounds.

Further, when an amount, concentration, or other value or parameter is given as a list of upper preferable values and lower preferable values, this is to be understood as specifically disclosing all ranges formed from any pair of an upper preferred value and a lower preferred value, regardless of whether ranges are separately disclosed.

As used herein, resids are non-volatile components, e.g., the fraction of the hydrocarbon feed with a nominal boiling point above 590°C (1100°F) as measured by ASTM D-6352-98 or D-2887. This invention works very well with non-volatiles having a nominal boiling point above 760°C (1400°F). The boiling point distribution of the hydrocarbon feed is measured by Gas Chromatograph Distillation (GCD) by ASTM D-6352-98 or D-2887 extended by extrapolation for materials boiling above 700°C (1292°F). Non-volatiles include coke precursors, which are large, condensable molecules which condense in the vapor, and then form coke under the operating conditions encountered in the present process of the invention.

The hydrocarbon feedstock with resid and coke precursors for use with the present invention typically comprises one or more of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, crude oil, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, hydrocarbon gas/residue admixtures, hydrogen/residue admixtures, C₄'s/residue admixtures, naphtha/residue admixtures, and gas oil/residue admixtures.

In one embodiment of this aspect of the invention, the hydrocarbon feedstock with resid and coke precursors has a nominal final boiling point of at least 315°C (600°F).

The present invention relates to a process for heating and steam cracking hydrocarbon feedstock containing resid. The process comprises heating the hydrocarbon feedstock, mixing the hydrocarbon feedstock with steam to form a mixture, flashing the mixture to form a vapor phase and a liquid phase, feeding the vapor phase to the radiant section of a pyrolysis furnace, and subsequently quenching the reaction, e.g., by using a transfer line exchanger, quench oil, or quench water.

In one aspect, the present invention relates to a process for removing coke formed during cracking of hydrocarbon feedstock containing resid and coke precursors, wherein steam is added to the feedstock to form a mixture which is thereafter separated into a vapor phase and a liquid phase by flashing in a flash/separation vessel. The vapor phase is then separated and cracked and the resulting cracked product recovered. Coking of internal surfaces in and proximally downstream of the vessel is controlled by interrupting the feed flow, purging the vessel with steam, introducing an air/steam mixture to at least partially combust the coke, and resuming the feed flow when sufficient coke has been removed.

In another aspect, the present invention relates to a process for removing coke formed during cracking of a hydrocarbon feedstock containing resid and coke precursors. The process comprises (a) heating the hydrocarbon feedstock; (b) mixing the heated hydrocarbon feedstock with a primary dilution steam stream to form a mixture stream containing coke precursors; (c) flashing the mixture stream in a flash/separation vessel to form a coke precursor depleted vapor phase and a coke precursor rich liquid phase; (d) removing the liquid phase through a bottom outlet and vapor phase with a trace of condensed vapor phase through an overhead outlet in the flash/separation vessel, which vessel comprises internal surfaces and associated outlet piping, which surfaces and piping become coated during operation with said liquid phase and/or condensed vapor phase and thereafter at least partially coked; (e) cracking the vapor phase in a radiant section of a pyrolysis furnace to produce an effluent comprising olefins, the pyrolysis furnace comprising a radiant section and a convection section; (f) quenching the effluent and recovering cracked product therefrom; and (g) determining the level of coking in the flash/separation vessel or in piping immediately downstream of said flash/separation vessel, and when a predetermined upper coke level is reached (i) interrupting flow of the hydrocarbon feedstock containing resid and coke precursors to the flash/separation vessel, (ii) purging the flash/separation vessel with steam under conditions sufficient to substantially remove the vapor phase from the vessel and the liquid phase from the internal surfaces and/or outlet piping, (iii) introducing an air/steam mixture through the flash/separation vessel under conditions sufficient to at least partially combust coke on the internal surfaces and outlet piping, and (iv) restarting the flow of the hydrocarbon feedstock to the flash/separation vessel when a predetermined lower coke level on the internal surfaces and/or outlet piping is reached.

In an embodiment of this aspect of the present invention, the flash/separation vessel comprises a baffle positioned above the liquid outlet which carries liquid outward and from the center of the vessel and downward. Typically, the baffle can be of any suitable shape, e.g., a substantially conical baffle whose apex points up, effecting the desired flow of liquid outward and downward. The baffle can be perforated, typically comprising perforations substituting for at least about 1% of the total surface area of a corresponding unperforated baffle. In another embodiment of this aspect of the present invention, the flash/separation vessel is substantially cylindrical. The mixture stream is introduced to the flash/separation vessel in a suitable manner, typically, by introducing the mixture stream (i) tangentially through at least one side inlet located in the side of the vessel, (ii) radially through at least one side inlet located in the side of the vessel, (iii) through the top of the vessel, and/or (iv) through the bottom of the vessel, and the vapor phase is removed through an overhead outlet of the vessel. In one embodiment, the mixture stream is introduced tangentially to the flash/separation vessel through at least one side inlet located in the side of said vessel, while the vapor phase is removed through an overhead outlet of the vessel.

The heating of the hydrocarbon feedstock can take any form known by those of ordinary skill in the art. However, as shown in the Figure, it is preferred that the heating comprises indirect contact of the hydrocarbon feedstock in the upper (farthest from the radiant section) convection section tube bank **2** of the furnace 1 with hot flue gases from the radiant section of the furnace. This can be accomplished, by way of non-limiting example, by passing the hydrocarbon feedstock through a bank of heat exchange tubes **2** located within the convection section **3** of the furnace **1**. The temperature of the hydrocarbon feedstock with resid and coke precursors is typically from 150 to 340°C (300 to 650°F) before mixing with the primary dilution steam stream, preferably between 150 and 260°C (300 and 500°F), such as 160 to 230°C (325 to 450°F), for example 170 to 220°C (340 to 425°F).

The heated hydrocarbon feedstock is mixed with primary dilution steam and optionally, a fluid which can be a hydrocarbon, preferably liquid but optionally vapor; water, steam, or a mixture thereof. The preferred fluid is water. A source of the fluid can be low pressure boiler feed water. The temperature of the fluid can be below, equal to, or above the temperature of the heated feedstock.

The mixing of the heated hydrocarbon feedstock and the fluid can occur inside or outside the pyrolysis furnace **1**, but preferably it occurs outside the furnace. The mixing can be accomplished using any mixing device known within the art. For example, it is possible to use a first sparger **4** of a double sparger assembly **9** for the mixing. The first sparger **4** can avoid or reduce hammering, caused by sudden vaporization of the fluid, upon introduction of the fluid into the heated hydrocarbon feedstock.

The present invention uses steam streams in various parts of the process. The primary dilution steam stream **17** can be mixed with the heated hydrocarbon feedstock as detailed below. In another embodiment, a secondary dilution steam stream **18** can be heated in the convection section and mixed with the heated mixture steam before the flash. The source of the secondary dilution steam may be primary dilution steam that has been superheated, optionally in a convection section of the pyrolysis furnace. Either or both of the primary and secondary dilution steam streams may comprise sour or process steam. Superheating the sour or process dilution steam minimizes the risk of corrosion that could result from condensation of sour or process steam.

In one embodiment of the present invention, in addition to the fluid mixed with the heated feedstock, the primary dilution steam **17** is also mixed with the feedstock. The primary dilution steam stream can be preferably injected into a second sparger **8**. It is preferred that the primary dilution steam stream is injected into the hydrocarbon fluid mixture before the resulting stream mixture optionally enters the convection section at **11** for additional heating by flue gas, generally within the same tube bank as would have been used for heating the hydrocarbon feedstock.

The primary dilution steam can have a temperature greater, lower or about the same as hydrocarbon feedstock fluid mixture but preferably the temperature is greater than that of the mixture and serves to partially vaporize the feedstock/fluid mixture. The primary dilution steam may be superheated, preferably in the convection section of the furnace, before being injected into the second sparger **8**.

The mixture stream comprising the heated hydrocarbon feedstock, the fluid, and the optional primary dilution steam stream leaving the second sparger **8** is optionally heated again in the convection section of the pyrolysis furnace **3** before the flash. The heating can be accomplished, by way of non-limiting example, by passing the mixture stream through a bank of heat exchange tubes **6** located within the convection section, usually as part of the first convection section tube bank, of the furnace and thus heated by the hot flue gas from the radiant section of the furnace. The temperature of the flue gas entering the first convection section tube bank is typically less than 815°C (1500°F), such as less than 705°C (1300°F), less than 620°C (1150°F), or even less than 540°C (1000°F). The thus-heated mixture stream leaves the convection section as a mixture stream **12** to optionally be further mixed with an additional steam stream.

Optionally, the secondary dilution steam stream **18** can be further split into a flash steam stream **19** which is mixed with the hydrocarbon mixture **12** before the flash and a bypass steam stream **21** which bypasses the flash of the hydrocarbon mixture and, instead is mixed with the vapor phase from the flash before the vapor phase is cracked in the radiant section of the furnace. The present invention can operate with all secondary dilution steam **18** used as flash steam **19** with no bypass steam **21.** Alternatively, the present invention can be operated with secondary dilution steam **18** directed to bypass steam **21** with no flash steam **19.** In a preferred embodiment in accordance with the present invention, the ratio of the flash steam stream **19** to bypass steam stream **21** should be preferably 1:20 to 20:1, and most preferably 1:2 to 2:1. In this embodiment, the flash steam **19** is mixed with the hydrocarbon mixture stream **12** to form a flash stream **20** which can be introduced tangentially before the flash in flash/separator vessel **5.** Preferably, the secondary dilution steam stream is superheated in a superheater section **16** in the furnace convection before splitting and mixing with the hydrocarbon mixture. The addition of the flash steam stream **19** to the hydrocarbon mixture stream **12** aids the vaporization of most volatile components of the mixture before the flash stream **20** enters the flash/separator vessel **S.**

Very high volatility feedstocks (e.g., ultra light crudes and contaminated condensates) can be heated in tube bank **2** of convection section **1** forming a vapor and a liquid phase and conveyed as stream **12** directly to the separation vessel **5** without mixing with dilution steam **17** or fluid.

The mixture stream **12** or the flash stream **20** is then flashed, for example in a flash/separator vessel **S,** for separation into two phases: a vapor phase comprising predominantly volatile hydrocarbons and steam and a liquid phase comprising predominantly non-volatile hydrocarbons. The vapor phase is preferably removed from the flash/separator vessel as an overhead vapor stream **13.** The vapor phase, preferably, is fed via control valve **36** to a convection section tube bank **23** of the furnace, preferably located nearest the radiant section of the furnace, for optional heating and through crossover pipes **24** to the radiant section of the pyrolysis furnace for cracking. The liquid phase of the flashed mixture stream is removed from the flash/separator vessel **5** as a bottoms stream **27.**

It is preferred to maintain a predetermined constant ratio of vapor to liquid in the flash/separator vessel **5,** but such ratio is difficult to measure and control. As an alternative, temperature of the mixture stream **12** before the flash/separator vessel **5** can be used as an indirect parameter to measure, control, and maintain an approximately constant vapor-to-liquid ratio in the flash/separator vessel **5.** Ideally, when the mixture stream temperature is higher, more volatile hydrocarbons will be vaporized and become available, as a vapor phase, for cracking. However, when the mixture stream temperature is too high, more heavy hydrocarbons will be present in the vapor phase and carried over to the convection furnace tubes, eventually coking the tubes. If the mixture stream **12** temperature is too low, resulting in a low ratio of vapor to liquid in the flash/separator vessel **5,** more volatile hydrocarbons will remain in liquid phase and thus will not be available for cracking.

The mixture stream temperature is controlled so as to maximize recovery/vaporization of volatiles in the feedstock while avoiding excessive coking in the furnace tubes or coking in piping and vessels conveying the mixture from the flash/separator vessel to the furnace **1** via line **13.** The pressure drop across the piping and vessels **13** conveying the mixture to the lower convection section **23**, and the crossover piping **24,** and the temperature rise across the lower convection section **23** may be monitored to detect the onset of coking problems. For instance, when the crossover pressure and process inlet pressure to the lower convection section **23** begins to increase rapidly due to coking as indicated by a rapid opening of control valve **36,** the temperature in the flash/separator vessel **5** and the mixture stream **12** should be reduced or the feed rate reduced. If coking occurs in the lower convection section, the temperature of the flue gas to the superheater **16** increases, requiring more desuperheater water **26.**

The selection of the mixture stream **12** temperature is also determined by the composition of the feedstock materials. When the feedstock contains higher amounts of lighter hydrocarbons, the temperature of the mixture stream **12** can be set lower. As a result, the amount of fluid used in the first sparger **4** would be increased and/or the amount of primary dilution steam used in the second sparger **8** would be decreased since these amounts directly impact the temperature of the mixture stream **12.** When the feedstock contains a higher amount of non-volatile hydrocarbons, the temperature of the mixture stream **12** should be set higher. As a result, the amount of fluid used in the first sparger **4** would be decreased while the amount of primary dilution steam used in the second sparger **8** would be increased. By carefully selecting a mixture stream temperature, the present invention can find applications in a wide variety of feedstock materials.

Typically, the temperature of the mixture stream **12** can be set and controlled at between 315 and 560°C (600 and 1040°F), such as between 370 and 510°C (700 and 950°F), for example between 400 and 480°C (750 and 900°F), and often between 430 and 475°C (810 and 890°F). These values will change with the concentration of volatiles in the feedstock as discussed above.

Considerations in determining the temperature include the desire to maintain a liquid phase to reduce the likelihood of coke formation on exchanger tube walls and in the flash/separator.

The temperature of mixture stream **12** can be controlled by a control system **7** which comprises at least a temperature sensor and any known control device, such as a computer application. Preferably, the temperature sensors are thermocouples. The control system **7** communicates with the fluid valve **14** and the primary dilution steam valve **15** so that the amount of the fluid and the primary dilution steam entering the two spargers can be controlled.

In order to maintain a constant temperature for the mixture stream 12 mixing with flash steam **19** and entering the flash/separator vessel to achieve a constant ratio of vapor to liquid in the flash/separator vessel **5,** and to avoid substantial temperature and flash vapor-to-liquid ratio variations, the present invention operates as follows: When a temperature for the mixture stream **12** before the flash/separator vessel **5** is set, the control system **7** automatically controls the fluid valve **14** and primary dilution steam valve **15** on the two spargers. When the control system **7** detects a drop of temperature of the mixture stream, it will cause the fluid valve **14** to reduce the injection of the fluid into the first sparger **4.** If the temperature of the mixture stream starts to rise, the fluid valve will be opened wider to increase the injection of the fluid into the first sparger **4.** In one possible embodiment, the fluid latent heat of vaporization controls mixture stream temperature.

When the **primary dilution steam stream 17 is injected** to the second sparger **8,** the temperature control system **7** can also be used to control the primary dilution steam valve **15** to adjust the amount of primary dilution steam stream injected to the second sparger **8.** This further reduces the sharp variation of temperature changes in the flash **5.** When the control system **7** detects a drop of temperature of the mixture stream **12,** it will instruct the primary dilution steam valve **15** to increase the injection of the primary dilution steam stream into the second sparger **8** while valve **14** is closed more. If the temperature starts to rise, the primary dilution steam valve will automatically close more to reduce the primary dilution steam stream injected into the second sparger **8** while valve **14** is opened wider.

In one embodiment in accordance with the present invention, the control system **7** can be used to control both the amount of the fluid and the amount of the primary dilution steam stream to be injected into both spargers.

In an example embodiment where the fluid is water, the controller varies the amount of water and primary dilution steam to maintain a constant mixture stream temperature **12,** while maintaining a constant ratio of H₂O (water+steam)-to-feedstock in the mixture **11.** To further avoid sharp variation of the flash temperature, the present invention also preferably utilizes an intermediate desuperheater **25** in the superheating section of the secondary dilution steam in the furnace. This allows the superheater **16** outlet temperature to be controlled at a constant value, independent of furnace load changes, coking extent changes, excess oxygen level changes, and other variables. Normally, this desuperheater **25** maintains the temperature of the secondary dilution steam between 425 and 590°C (800 and 1100°F), for example between 455 and 540°C (850 and 1000°F), such as between 455 and 510°C (850 and 950°F), and typically between 470 and 495°C (875 and 925°F). The desuperheater can be a control valve and optional water atomizer nozzle. After partial preheating, the secondary dilution steam exits the convection section and a fine mist of water **26** can be added which rapidly vaporizes and reduces the temperature. The steam is preferably then further heated in the convection section. The amount of water added to the superheater can control the temperature of the steam which is mixed with mixture stream **12.**

Although the description above is based on adjusting the amounts of the fluid and the primary dilution steam streams injected into the hydrocarbon feedstock in the two spargers **4** and **8,** according to the predetermined temperature of the mixture stream **12** before the flash/separator vessel **5,** the same control mechanisms can be applied to other parameters at other locations. For instance, the flash pressure and the temperature and the flow rate of the flash steam **19** can be changed to effect a change in the vapor-to-liquid ratio in the flash. Also, excess oxygen in the flue gas can also be a control variable, albeit, possibly a slow one.

In addition to maintaining a constant temperature of the mixture stream **12** entering the flash/separator vessel, it is generally also desirable to maintain a constant hydrocarbon partial pressure of the flash stream **20** in order to maintain a constant ratio of vapor to liquid in the flash/separator vessel. By way of examples, the constant hydrocarbon partial pressure can be maintained by maintaining constant flash/separator vessel pressure through the use of control valves **36** on the vapor phase line **13,** and by controlling the ratio of steam to hydrocarbon feedstock in stream **20.** The vapor phase line **13** contains a trace of condensed vapor phase in addition to the vapor phase. These trace amounts of condensed vapor phase are typically less than about 3 wt%, such as less than about 1 wt% of the total overhead stream. However, their presence is highly undesirable inasmuch as these condensates act as coke precursors.

Typically, the hydrocarbon partial pressure of the flash stream in the present invention is set and controlled at between 25 and 830 kPa (4 and 120 psia), such as between 35 and 100 kPa (5 and 15 psia), for example between 40 and 75 kPa (6 and 11 psia).

In one embodiment, the flash is conducted in at least one flash/separator vessel. Typically the flash is a one-stage process with or without reflux. The flash/separator vessel **5** is normally operated at 275 to 1400 kPag (40 to 200 psig) pressure and its temperature is usually the same or slightly lower than the temperature of the flash stream **20** before entering the flash/separator vessel **5.** Typically, the temperature at which the flash/separator vessel operates is 310 to 340°C (600 to 1000°F). For example, the pressure of the flash can be 600 to 1100 kPa (85 to 155 psia) and the temperature can be 370 to 490°C (700 to 920°F). As a further example, the pressure of the flash can be 700 to 1000 kPa (105 to 145 psia) with a temperature of 400 to 480°C (750 to 900°F). In yet another example, the pressure of the flash/separator vessel can be 700 to 760 kPa (105 to 125 psia) and the temperature can be 430 to 475°C (810 to 890°F). Depending on the temperature of the mixture stream **12,** generally 50 to 98% of the mixture stream being flashed is in the vapor phase, such as 60 to 95%, for example 65 to 90%.

The flash/separator vessel **5** is generally operated, in one aspect, to minimize the temperature of the liquid phase at the bottom of the vessel because too much heat may cause coking of the non-volatiles in the liquid phase. Use of the secondary dilution steam stream **18** in the flash stream entering the flash/separator vessel lowers the vaporization temperature because it reduces the partial pressure of the hydrocarbons (i.e., a larger mole fraction of the vapor is steam) and thus lowers the required liquid phase temperature. It may also be helpful to recycle a portion of the externally cooled flash/separator vessel bottoms liquid **30** back to the flash/separator vessel to help cool the newly separated liquid phase at the bottom of the flash/separator vessel **S.** Stream **27** can be conveyed from the bottom of the flash/separator vessel **5** to the cooler **28** via pump **37.** The cooled stream **29** can then be split into a recycle stream **30** and export stream **22.** The temperature of the recycled stream would typically be 500 to 600°F (260 to 315°C), for example 520 to 550°F (270 to 290°C). The amount of recycled stream can be 80 to 250% of the amount of the newly separated bottom liquid inside the flash/separator vessel, such as 90 to 225%, for example, 100 to 200%.

The flash is generally also operated, in another aspect, to minimize the liquid retention/holding time in the flash vessel. In one example embodiment, the liquid phase is discharged from the vessel through a small diameter "boot" or cylinder **35** on the bottom of the flash/separator vessel. Typically, the liquid phase retention time in the drum is less than 75 seconds, for example, less than 60 seconds, such as less than 30 seconds, and often less than 15 seconds. The shorter the liquid phase retention/holding time in the flash/separator vessel, the less coking occurs in the bottom of the flash/separator vessel.

Although it is the preferred embodiment for stream **27** to flow out of the bottom of the boot **35**, stream **27** can be can be located as a side drawoff the boot **35** or the low section of flash/separator vessel **5**.

Inasmuch as the present invention relates to controlling coking within the flash/separator vessel **5,** it is noted that optimizing the cut made by the flash/separator vessel typically employs conditions of high temperatures and convection pressures. These conditions are conducive to the formation of coke by thermal cracking on the vessel internals, e.g., baffles and walls. In one embodiment of the invention, a substantially conical baffle **100**, which is advantageously perforated, employed for the purpose of reducing or avoiding entrainment of liquid in the overhead, is subjected to coking of its surfaces. Moreover, coke laydown in the outlet piping (overhead outlet associated with that portion of vapor phase line **13** downstream of line **21** and bottom outlet associated with liquid phase line **27**) immediately downstream of the vessel **5** is enhanced by steam stripping of the lighter components in the vessel overhead stream by bypass steam **21** injected in the overhead stream. Coke forming in the flash/separator vessel **5** and its adjacent downstream piping can be removed by techniques such as hydroblasting which required shutdown of the furnace **1** for hydroblasting of the vessel internals and associated piping by introducing water (not shown) to the vessel. Such techniques typically require long shutdown times followed by steam purging before restarting the process.

In one embodiment of the present invention, the sensors comprise sensor **112** and sensor **114** within the vessel **5** or its boot **35**. Sensors may also be positioned downstream of the vessel, e.g., downstream of where bypass stream is introduced to overhead at **116** or at **118** downstream of the boot **35** which allows monitoring the bottoms slipstream temperature of the flash/separation vessel. The sensors are typically surface thermocouples associated with the inside of the flash/separation vessel **5** or associated piping. In order to effectively remove coke, the temperature of the air/steam mixture is typically controlled to be hot enough to combust the coke, such as about 480°C (896°F). The air/steam ratio is typically controlled to less than 0.2 to limit flame temperatures to 570 to 615°C (1060 to 1140°F) and the temperature of the bottoms slip stream to 550°C (1025°F) so as not to exceed the allowable design temperature of the flash/separation vessel and its associated piping. Once the vessel is decoked, the air to steam rate can be increased to about 0.5. In order to effectively decoke the baffle **100** it is advantageous to provide a slipstream, such as about 10% of the air/steam mixture through the baffle perforations and around the baffle perimeter and out through the bottom outlet as stream **27** whose flow can be controlled by restriction orifices **120.** The remaining 90% of the air/steam mixture can pass as overhead via **13** whose flow optionally can be controlled by **36.** Both the overhead and bottom flow of the air/steam mixture can be controlled by controller **110,** such as a function of temperatures registered by one or more of the sensors. Finally, controller **110** can interrupt the flow of hydrocarbon feedstock, effect steam purge through a valve and lines 122 and 106 and then resume the flow of hydrocarbon feedstock by valve **124** during the process as a function of coke levels within the vessel and associated piping, in accordance with the present invention.

Turning from the subject of controlling coking within the flash/separator vessel **5** and its associated piping, and considering the further processing of the vapor phase taken as overhead from the vessel, it is noted that the vapor phase may contain, for example, 55 to 70% hydrocarbons and 30 to 45% steam. The boiling end point of the vapor phase is normally below 760°C (1400°F), such as below 590°C (1100°F), and often below 565°C (1050°F). The vapor phase is continuously removed from the flash/separator vessel **5** through an overhead pipe, which optionally conveys the vapor to a centrifugal separator **38** to remove trace amounts of entrained and/or condensed liquid. The vapor then typically flows into a manifold that distributes the flow to the convection section of the furnace.

The vapor phase stream **13** continuously removed from the flash/separator vessel is preferably superheated in the pyrolysis furnace lower convection section **23** to a temperature of, for example, 425 to 705°C (800 to 1300°F) by the flue gas from the radiant section of the furnace. The vapor phase is then introduced to the radiant section of the pyrolysis furnace to be cracked.

The vapor phase stream **13** removed from the flash/separator vessel can optionally be mixed with a bypass steam stream **21** before being introduced into the furnace lower convection section **23.**

The bypass steam stream **21** is a split steam stream from the secondary dilution steam **18.** Preferably, the secondary dilution steam is first heated in the convection section of the pyrolysis furnace **3** before splitting and mixing with the vapor phase stream removed from the flash **5.** The superheating after the mixing of the bypass steam **21** with the vapor phase stream **13** ensures that all but the heaviest components of the mixture in this section of the furnace are vaporized before entering the radiant section. Raising the temperature of vapor phase to between 425 and 705°C (800 to 1300°F) in the lower convection section **23** also helps the operation in the radiant section since radiant tube metal temperature can be reduced. This results in less coking potential in the radiant section. The superheated vapor is then cracked in the radiant section of the pyrolysis furnace.

The overhead vapor from the flash/separation vessel is optionally heated to a sufficient temperature for passing to the radiant (cracking) zone of the pyrolysis furnace. In the radiant zone the feed is thermally cracked to produce an effluent comprising olefins, including ethylene and other desired light olefins, and byproducts which is passed to a recovery train for recovery of products as known in the art.

## Claims

1. A process for removing coke formed during cracking of a hydrocarbon feedstock containing resid and coke precursors, said process comprising:
(a) heating said hydrocarbon feedstock;
(b) mixing the heated hydrocarbon feedstock with a primary dilution steam stream to form a mixture stream containing coke precursors;
(c) flashing the mixture stream in a flash/separation vessel to form a coke precursor depleted vapor phase and a coke precursor rich liquid phase;
(d) removing the liquid phase through a bottom outlet and vapor phase with a trace of condensed vapor phase through an overhead outlet in the flash/separation vessel which vessel comprises internal surfaces and associated outlet piping, which surfaces and piping become coated during operation with said liquid phase and/or said condensed vapor phase and thereafter at least partially coked;
(e) cracking the vapor phase in a radiant section of a pyrolysis furnace to produce an effluent comprising olefins, said pyrolysis furnace comprising a radiant section and a convection section;
(f) quenching the effluent and recovering cracked product therefrom; and
(g) determining the level of coking in said flash/separation vessel or in piping immediately downstream of said flash/separation vessel, and when a predetermined upper coke level is reached:
(i) interrupting flow of said hydrocarbon feedstock containing resid and coke precursors to said flash/separation vessel;
(ii) purging said flash/separation vessel with steam under conditions sufficient to substantially remove said vapor phase from said vessel and said liquid phase from said internal surfaces and/or outlet piping;
(iii) introducing an air/steam mixture through said flash/separation vessel under conditions sufficient to at least partially combust coke on said internal surfaces and outlet piping; and
(iv) restarting the flow of said hydrocarbon feedstock to said flash/separation vessel when a predetermined lower coke level on said internal surfaces and/or outlet piping is reached.

2. The process of claim 1, wherein said flash/separation vessel comprises a baffle positioned above the liquid outlet which carries liquid outward and from the center of the vessel and downward.

3. The process of claim 2, wherein said baffle is a substantially conical baffle whose apex points up.

4. The process of claim 2 or 3, wherein said baffle is a perforated, substantially conical baffle.

5. The process of claim 2, 3, or 4, wherein said baffle comprises perforations substituting for at least 1% of its total surface area.

6. The process of any preceding claim, wherein said flash/separation vessel is substantially cylindrical.

7. The process of any preceding claim, wherein said mixture stream is introduced tangentially through at least one side inlet located in the side of said vessel, radially through at least one side inlet located in the side of said vessel, through the top of said vessel and/or through the bottom of said vessel, and said vapor phase is removed through an overhead outlet of said vessel.

8. The process of any preceding claim, wherein said mixture stream is introduced tangentially to the flash/separation vessel through at least one side inlet located in the side of said vessel.

9. The process of any preceding claim, wherein said purging steam is introduced through at least one side inlet.

10. The process of any preceding claim, wherein said air/steam mixture stream is introduced through at least one side inlet.

11. The process of any preceding claim, wherein said purging steam is introduced to said flash/separation vessel at a temperature ranging from 400 to 550°C (750 to 1025°F), a total pressure ranging from 0 to 830 kPag (0 to 120 psig), and a total flow of steam equal 5 to 250 times the volume of the flash/separator vessel.

12. The process of claim 11, wherein said purging steam is introduced to said flash/separation vessel at a temperature ranging from 450 to 510°C (840 to 950°F), a total pressure ranging from 350 to 700 kPag (from 50 to 120 psig), and a total flow of steam equal 100 to 200 times the volume of the flash/separator vessel.

13. The process of any preceding claim, wherein a major portion of said air/steam mixture is removed from said flash/separation vessel as an overhead stream and a minor portion of at least 2% of the total air/steam mixture is removed from said flash/separation vessel as a bottoms slipstream.

14. The process of claim 13, wherein said bottoms slipstream ranges from 5% to 10% of the total air/steam mixture.

15. The process of claim 13 or 14, wherein the amount of said air/steam mixture removed as a bottoms slipstream is controlled by a flow valve associated with the bottom outlet.

16. The process of claim 13, 14 or 15, wherein the amount of said air/steam mixture removed as a bottoms slipstream is controlled by one or more restriction orifices in the piping associated with the bottom outlet.

17. The process of any of claims 13 through 16, wherein said air/steam mixture is introduced to said flash/separation vessel under conditions sufficient to combust coke while limiting adiabatic flame temperatures to from 570 to 615°C (1060 to 1140°F), the design temperature of the piping for said bottoms slipstream piping of the flash/separation vessel.

18. The process of any preceding claim, wherein an air/steam weight ratio of the air/steam mixture is maintained at no greater than 0.2 during decoking.

19. The process of any preceding claim, wherein said air/steam weight ratio of the air/steam mixture is maintained at no greater than 0.5 after coke in the flash/separator is removed.

20. The process of any of claims 17 through 19, which further comprises monitoring internal temperature of the flash/separation vessel and controlling
said air/steam weight ratio as a function of said internal temperature.

21. The process of any preceding claim, which further comprises monitoring the bottoms slipstream temperature of the flash/separation vessel and controlling said air/steam weight ratio as a function of said internal temperature.

22. The process of claim 21, wherein said monitoring is carried out by means of a surface thermocouple attached to the outside of the bottom of the flash/separation vessel or the piping immediately downstream of said flash/separation vessel.

23. The process of claim 22, wherein said monitoring is carried out by analyzing the flue gas produced during air/steam decoking for CO/CO₂.

24. The process of any preceding claim, wherein the purge and or decoke stream comprises sour or process steam.

25. An apparatus for cracking a hydrocarbon feedstock containing resid and coke precursors, comprising:
(a) a heating zone for heating said hydrocarbon feedstock to provide heated hydrocarbon feedstock;
(b) a mixing zone for mixing a primary dilution steam stream with said heated hydrocarbon feedstock to provide a mixture stream containing coke precursors;
(c) a flash/separation vessel for flashing said mixture stream to form a coke precursor depleted vapor phase and a coke precursor rich liquid phase, said vessel comprising:
(i) a bottom outlet in the flash/separation vessel which comprises internal surfaces and associated outlet piping, which surfaces and piping during operation become coated with said liquid phase and thereafter at least partially coked;
(ii) an overhead outlet for removing the vapor phase and a trace of condensed vapor phase, which overhead outlet comprises internal surfaces and associated outlet piping, which surfaces and piping during operation become coated with condensed vapor phase and thereafter at least partially coked;
(iii) an inlet for introducing sufficient purging steam to said flash/separation vessel to remove said vapor phase from said vessel and said liquid phase from said internal surfaces and/or outlet piping; and
(iv) an inlet for introducing an air/steam mixture through said flash/separation vessel under conditions sufficient to at least partially combust coke on said internal surfaces and/or outlet piping;
(d) a pyrolysis furnace comprising a convection section, and a radiant section for cracking the vapor phase to produce an effluent comprising olefins;
(e) a means for quenching the effluent;
(f) a recovery train for recovering cracked product from the quenched effluent;
(g) a means for determining the level of coking in said flash/separation vessel and/or in said associated outlet piping; and
(h) a control valve for controlling the flow of said hydrocarbon feedstock with resid and coke precursors to said flash/separation vessel.

26. The apparatus of claim 25, wherein said flash/separation vessel comprises a baffle positioned above the liquid outlet to prevent entrainment of the heavy liquid bottoms in said vapor phase.

27. The apparatus of claim 26, wherein said baffle is a substantially conical baffle whose apex points upward.

28. The apparatus of claim 26 or 27, wherein said baffle is a perforated, substantially conical baffle.

29. The apparatus of claim 26, 27, or 28, wherein said baffle comprises perforations making up at least 1% of its total surface area.

30. The apparatus of any of claims 25 through 29, wherein said flash/separation vessel further comprises at least one side inlet for tangentially introducing said mixture stream.

31. The apparatus of any of claims 25 through 30, wherein said flash/separation vessel contains a means to monitor its internal temperature.

32. The apparatus of any of claims 25 through 31, which further comprises a means to monitor the bottom outlet temperature.

33. The apparatus of claim 32, wherein said monitoring means comprises a surface thermocouple attached to the outside of the bottom of the flash/separation vessel or said outlet piping immediately downstream of said flash/separation vessel. ,

34. The apparatus of claim 32 or 33, which further comprises a means to control air/steam weight ratio of said air/steam mixture stream as a function of said internal temperature and said bottom outlet temperature.

## Patentansprüche

1. Verfahren zum Entfernen von Koks, der sich während des Crackens von Kohlenwasserstoffeinsatzmaterial gebildet hat, das Rückstandsöl (engl. Resid) und Koksvorläufer enthält, bei dem:
(a) das Kohlenwasserstoffeinsatzmaterial erwärmt wird,
(b) das erwärmte Kohlenwasserstoffeinsatzmaterial mit einem Hauptverdünnungsdampfstrom gemischt wird, so dass sich ein gemischter Strom bildet, der Koksvorläufer enthält,
(c) der gemischte Strom in einem Flash/Trenngefäß geflasht wird, so dass sich eine an Koksvorläufer verarmte Dampfphase und eine an Koksvorläufer reiche flüssige Phase bildet,
(d) die flüssige Phase durch einen unteren Auslass und die Dampfphase mit einer sehr geringen Menge an kondensierter Dampfphase über einen Überkopf-Auslass in dem Flash/Trennungsgefäß entfernt wird, wobei das Gefäß interne Oberflächen und ein damit verbundenes Auslassröhrensystem umfasst, welche Oberflächen und welches Röhrensystem während des Betriebs mit der flüssigen Phase und/oder der kondensierten Dampfphase überzogen werden und danach zumindest teilweise verkokt werden,
(e) die Dampfphase in einem Strahlungsabschnitt eines Pyrolyseofens gecrackt wird, so dass ein Ausfluss erzeugt wird, der Olefine umfasst, wobei der Pyrolyseofen einen Strahlungsabschnitt und einen Konvektionsabschnitt umfasst,
(f) der Ausfluss gequencht wird und daraus gecracktes Produkt gewonnen wird, und
(g) das Ausmaß an Koksbildung in dem Flash/Trenngefäß oder in dem Röhrensystem unmittelbar stromabwärts von dem Flash/Trenngefäß bestimmt wird und, wenn ein Vorbestimmter oberer Koksgehalt erreicht wird:
(i) der Strom an Kohlenwasserstoffeinsatzmaterial, das Rückstandsöl und Koksvorläufer enthält, in das Flash/Trenngefäß unterbrochen wird,
(ii) das Flash/Trenngefäß unter Bedingungen gespült wird, die ausreichend sind, um im Wesentlichen die Dampfphase aus dem Gefäß und die flüssige Phase von den internen Oberflächen und/oder dem Auslassröhrensystem des Gefäßes zu entfernen,
(iii) eine Mischung aus Luft/Dampf durch das Flash/Trenngefäß unter Bedingungen eingebracht wird, die ausreichend sind, um zumindest teilweise Koks auf den internen Oberflächen und dem Auslassröhrensystem zu verbrennen, und
(iv) der Zustrom des Kohlenwasserstoffeinsatzmaterials in das Flash/Trenngefäß erneut gestartet wird, wenn eine Vorbestimmte, niedrigere Koksmenge auf den internen Oberflächen und/oder dem Auslassröhrensystem erreicht wird.

2. Verfahren nach Anspruch 1, wobei das Flash/Trenngefäß eine Prallfläche umfasst, die oberhalb des Flüssigkeitsauslasses angeordnet ist, und die Flüssigkeit nach außen und von dem Zentrum des Gefäßes und nach unten trägt.

3. Verfahren nach Anspruch 2, wobei die Prallfläche eine im Wesentlichen konische Prallfläche ist, deren Spitze nach oben zeigt.

4. Verfahren nach Anspruch 2 oder 3, bei dem die Prallfläche eine perforierte, im Wesentlichen konische Prallfläche ist.

5. Verfahren nach Anspruch 2, 3 oder 4, bei dem die Prallfläche Perforationen umfasst, die mindestens 1% ihrer Gesamtoberfläche ersetzen.

6. Verfahren nach einem der vorhergehenden Ansprüche, bei dem das Flash/Trenngefäß im Wesentlichen zylindrisch ist.

7. Verfahren nach einem der vorhergehenden Ansprüche, bei dem der gemischte Strom tangential durch mindestens einen seitlichen Einlass, der in der Seite des Gefäßes angeordnet ist, radial durch mindestens einen seitlichen Einlass, der in der Seite des Gefäßes angeordnet ist, durch den oberen Teil des Gefäßes und/oder durch den Boden des Gefäßes eingebracht wird, und die Dampfphase durch einen Überkopf-Auslass des Gefäßes entfernt wird.

8. Verfahren nach einem der vorhergehenden Ansprüche, wobei der gemischte Strom tangential zu dem Flash/Trenngefäß durch mindestens einen seitlichen Einlass eingebracht wird, der in der Seite des Gefäßes angeordnet ist.

9. Verfahren nach einem der vorhergehenden Ansprüche, bei dem der Spülstrom durch mindestens einen seitlichen Einlass eingebracht wird.

10. Verfahren nach einem der vorhergehenden Ansprüche, bei dem der gemischte Strom aus Luft/Dampf durch mindestens einen seitlichen Einlass eingebracht wird.

11. Verfahren nach einem der vorhergehenden Ansprüche, bei dem der Spülstrom bei einer Temperatur im Bereich von 400 bis 550°C (750 bis 1025°F), einem Gesamtdruck von 0 bis 830 kPa Überdruck (0 bis 120 psi Überdruck) und einem Gesamtfluss an Strom, der 5 bis 250 Mal das Volumen des Flash/Trenngefäßes beträgt, eingebracht wird.

12. Verfahren nach Anspruch 11, bei dem der Spülstrom bei einer Temperatur im Bereich von 450 bis 510°C (840 bis 950°F), einem Gesamtdruck von 350 bis 700 kPa Überdruck (50 bis 120 psi Überdruck) und einem Gesamtfluss an Strom, der 100 bis 200 Mal das Volumen des Flash/Trenngefäßes beträgt, eingebracht wird.

13. Verfahren nach einem der vorhergehenden Ansprüche, bei dem ein größerer Teil der Mischung aus Luft/Dampf aus dem Flash/Trenngefäß als Überkopfstrom entfernt wird und ein kleinerer Teil von mindestens 2% der gesamten Mischung aus Luft/Dampf aus dem Flash/Trenngefäß als Bodenproduktnebenstrom entfernt wird.

14. Verfahren nach Anspruch 13, bei dem der Bodenproduktnebenstrom von 5% bis 10% der gesamten Mischung aus Luft/Dampf ausmacht.

15. Verfahren nach Anspruch 13 oder 14, bei der die Menge an Mischung aus Luft/Dampf, die als Bodenproduktnebenstrom entfernt wird, mittels eines Strömungsventils, das mit dem unteren Auslass verbunden ist, gesteuert wird.

16. Verfahren nach Anspruch 13, 14 oder 15, bei dem die Menge an Mischung aus Luft/Dampf, die als Bodenproduktnebenstrom entfernt wird, mittels einer oder mehrerer Drosseldüsen in dem Leitungssystem, das mit dem unteren Auslass verbunden ist, gesteuert wird.

17. Verfahren nach einem der Ansprüche 13 bis 16, bei dem die Mischung aus Luft/Dampf in das Flash/Trenngefäß unter Bedingungen eingebracht wird, die ausreichend sind, um Koks zu verbrennen, während die adiabatischen Flammtemperaturen auf von 570 bis 615°C (1060 bis 1140°F) begrenzt werden, die Temperatur des Leitungssystems, für das das Leitungssystem für den Bodenproduktnebenstrom des Flash/Trenn-gefäßes ausgelegt ist.

18. Verfahren nach einem der vorhergehenden Ansprüche, bei dem während der Koksentfernung das Gewichtsverhältnis von Luft/Dampf der Mischung aus Luft/Dampf bei nicht größer als 0,2 gehalten wird.

19. Verfahren nach einem der vorhergehenden Ansprüche, bei dem das Verhältnis von Luft/Dampf der Mischung aus Luft/Dampf bei nicht größer als 0,5 gehalten wird, nachdem Koks in dem Flash/Trenngefäß entfernt worden ist.

20. Verfahren nach einem der Ansprüche 17 bis 19, bei dem ferner die interne Temperatur des Flash/Trenngefäßes überwacht wird, und das Verhältnis von Luft/Dampf als Funktion der internen Temperatur gesteuert wird.

21. Verfahren nach einem der vorhergehenden Ansprüche, bei dem ferner die Temperatur des Bodenproduktnebenstroms des Flash/Trenngefäßes überwacht wird, und das Gewichtsverhältnis von Luft/Dampf als Funktion dieser internen Temperatur gesteuert wird.

22. Verfahren nach Anspruch 21, bei dem die Überwachung mittels eines Oberflächenthermoelements durchgeführt wird, das an der Außenseite des Bodens des Flash/Trenngefäßes oder an dem Leitungssystem angebracht ist, das sich unmittelbar stromabwärts von dem Flash/Trenngefäß befindet.

23. Verfahren nach Anspruch 22, bei dem die Überwachung durchgeführt wird, indem die während der Koksentfernung mittels Luft/Dampf gebildeten Rauchgase auf CO/CO₂ analysiert werden.

24. Verfahren nach einem der vorhergehenden Ansprüche, bei dem der Spül- und/oder der Koksentfernungsstrom sauren Strom oder Prozessstrom umfasst.

25. Vorrichtung zum Cracken von Kohlenwasserstoffeinsatzmaterial, das Rückstandsöl und Koksvorläufer enthält, umfassend:
(a) eine Heizzone zum Erwärmen des Kohlenwasserstoffeinsatzmaterials, so dass erwärmtes Kohlenwasserstoffeinsatzmaterial bereitgestellt wird,
(b) eine Mischzone zum Mischen eines Hauptverdünnungsdampfstrom mit dem erwärmten Kohlenwasserstoffeinsatzmaterial, so dass ein gemischter Strom bereitgestellt wird, der Koksvorläufer enthält,
(c) ein Flash/Trenngefäß zum Flashen des gemischten Stroms, so dass sich eine an Koksvorläufer verarmte Dampfphase und eine an Koksvorläufer angereicherte flüssige Phase bildet, wobei das Gefäß:
(i) einen Bodenauslass in dem Flash/Trenngefäß, das interne Oberflächen und ein damit verbundenes Auslassröhrensystem umfasst, welche Oberflächen und welches Röhrensystem während des Betriebs mit der flüssigen Phase überzogen und danach zumindest teilweise verkokt werden,
(ii) einen Überkopf-Auslass zum Entfernen der Dampfphase und einer sehr geringen Menge an kondensierter Dampfphase, welcher Überkopf-Auslass interne Oberflächen und damit verbundenes Röhrensystem umfasst, welche Oberflächen und welches Röhrensystem während des Betriebs mit kondensierter Dampfphase überzogen werden und danach zumindest teilweise verkokt werden,
(iii) einen Einlass zum Einbringen von ausreichend Spülstrom in das Flash/Trenngefäß, so dass die Dampfphase aus dem Gefäß und die flüssige Phase von den internen Oberflächen und/oder dem Auslassröhrensystem entfernt werden, und
(iv) einen Einlass zum Einbringen einer Mischung aus Luft/Dampf durch das Flash/Trenngefäß unter Bedingungen, die ausreichend sind, so dass Koks auf den internen Oberflächen und/oder dem Auslassröhrensystem zumindest teilweise verbrannt wird, umfasst,
(d) einen Pyrolyseofen, der einen Konvektionsabschnitt und einen Strahlungsabschnitt zum Cracken der Dampfphase umfasst, so dass ein Ausfluss erzeugt wird, der Olefine umfasst,
(e) Mittel zum Quenchen des Ausflusses,
(f) eine Rückgewinnungskolonne zum Gewinden von gecracktem Produkt aus dem gequenchten Ausfluss,
(g) Mittel zum Bestimmen des Ausmaßes an Verkokung in dem Flash/Trenngefäß oder in dem verbundenen Auslassröhrensystem und
(h) ein Steuerventil zum Steuern des Stroms aus dem Kohlenwasserstoffeinsatzmaterial mit Rückstandsöl und Koksvorläufern in das Flash/Trenngefäß.

26. Vorrichtung nach Anspruch 25, wobei das Flash/Trenngefäß eine Prallfläche umfasst, die oberhalb des Flüssigkeitsauslasses angeordnet ist, so dass ein Mitreißen der schweren flüssigen Bodenprodukte in die Dampfphase vermieden wird.

27. Verfahren nach Anspruch 26, wobei die Prallfläche eine im Wesentlichen konische Prallfläche ist, deren Spitze nach oben zeigt.

28. Verfahren nach Anspruch 26 oder 27, wobei die Prallfläche eine perforierte, im Wesentlichen konische Prallfläche ist.

29. Vorrichtung nach Anspruch 26, 27 oder 28, wobei die Prallfläche Perforierungen umfasst, die mindestens 1% ihrer gesamten Oberfläche ausmachen.

30. Verfahren nach einem der Ansprüche 25 bis 29, wobei das Flash/Trenngefäß ferner mindestens einen seitlichen Einlass zum tangentialen Einbringen des gemischten Stroms umfasst.

31. Verfahren nach einem der Ansprüche 25 bis 30, wobei das Flash/Trenngefäß Mittel enthält, um die interne Temperatur zu überwachen.

32. Vorrichtung nach einem der Ansprüche 25 bis 31, die ferner Mittel umfasst, um die Auslasstemperatur am Boden zu bestimmen.

33. Verfahren nach Anspruch 32, wobei die Überwachungsmittel ein Oberflächenthermoelement umfassen, das an der Außenseite des Bodens des Flash/Trenngefäßes oder am Auslassröhrensystem unmittelbar stromabwärts des Flash/Trenn-gefäßes angebracht ist.

34. Verfahren nach Anspruch 32 oder 33, das ferner Mittel zur Steuerung des Gewichtsverhältnisses von Luft/Dampf der Mischung aus Luft/Dampf als Funktion der internen Temperatur und der Auslasstemperatur am Boden umfasst.

## Revendications

1. Procédé d'élimination du coke formé au cours du craquage d'une charge d'alimentation d'hydrocarbures contenant un résidu et des précurseurs de coke, ledit procédé comprenant les étapes consistant à :
(a) chauffer ladite charge d'alimentation d'hydrocarbures ;
(b) mélanger la charge d'alimentation d'hydrocarbures chauffée avec un courant de vapeur d'eau de dilution primaire pour former un courant de mélange contenant des précurseurs de coke ;
(c) détendre le courant de mélange dans une cuve de détente/séparation pour former une phase vapeur appauvrie en précurseur de coke et une phase liquide riche en précurseur de coke ;
(d) éliminer la phase liquide par une sortie de fond et la phase vapeur avec une trace de phase vapeur condensée par une sortie de tête dans la cuve de détente/séparation, laquelle cuve comprend des surfaces internes et une tuyauterie de sortie associée, lesquelles surfaces et laquelle tuyauterie se recouvrent, au cours du fonctionnement, de ladite phase liquide et/ou de ladite phase vapeur condensée et deviennent après cela au moins partiellement cokéfiées ;
(e) craquer la phase vapeur dans une section de rayonnement d'un four à pyrolyse pour produire un effluent comprenant des oléfines, ledit four à pyrolyse comprenant une section de rayonnement et une section de convexion ;
(f) tremper l'effluent et y récupérer le produit craqué ; et
(g) déterminer le niveau de cokéfaction dans ladite cuve de détente/séparation ou dans la tuyauterie située juste en aval de ladite cuve de détente/séparation, et lorsqu'un niveau de coke supérieur prédéterminé est atteint :
(i) interrompre la circulation de ladite charge d'alimentation d'hydrocarbures contenant un résidu et des précurseurs de coke vers ladite cuve de détente/séparation ;
(ii) purger ladite cuve de détente/séparation avec de la vapeur d'eau dans des conditions suffisantes pour éliminer essentiellement ladite phase vapeur de ladite cuve et ladite phase liquide desdites surfaces internes et/ou de ladite tuyauterie de sortie ;
(iii) introduire un mélange air/vapeur d'eau à travers ladite cuve de détente/séparation dans des conditions suffisantes pour brûler au moins partiellement le coke sur lesdites surfaces internes et ladite tuyauterie de sortie ; et
(iv) redémarrer la circulation de ladite charge d'alimentation d'hydrocarbures vers ladite cuve de détente/séparation lorsqu'un niveau de coke inférieur prédéterminé est atteint sur lesdites surfaces internes et/ou ladite tuyauterie de sortie.

2. Procédé selon la revendication 1, dans lequel ladite cuve de détente/séparation comprend une chicane placée au-dessus de la sortie de liquide qui transporte le liquide de l'intérieur vers l'extérieur et du centre de la cuve et de haut en bas.

3. Procédé selon la revendication 2, dans lequel ladite chicane est une chicane essentiellement conique dont le sommet est vers le haut.

4. Procédé selon la revendication 2 ou 3, dans lequel ladite chicane est une chicane essentiellement conique perforée.

5. Procédé selon la revendication 2, 3 ou 4, dans lequel ladite chicane comprend des perforations constituant au moins 1% de sa superficie totale.

6. Procédé selon l'une quelconque des revendications précédentes, dans lequel ladite cuve de détente/séparation est essentiellement cylindrique.

7. Procédé selon l'une quelconque des revendications précédentes, dans lequel ledit courant de mélange est introduit tangentiellement par au moins une entrée latérale située dans le côté de ladite cuve, radialement par au moins une entrée latérale située dans le côté de ladite cuve, par le sommet de ladite cuve et/ou par le fond de ladite cuve, et ladite phase vapeur est éliminée par une sortie de tête de ladite cuve.

8. Procédé selon l'une quelconque des revendications précédentes, dans lequel ledit courant de mélange est introduit tangentiellement à la cuve de détente/séparation par au moins une entrée latérale située dans le côté de ladite cuve.

9. Procédé selon l'une quelconque des revendications précédentes, dans lequel ladite vapeur d'eau de purge est introduite par au moins une entrée latérale.

10. Procédé selon l'une quelconque des revendications précédentes, dans lequel ledit courant de mélange air/vapeur d'eau est introduit par au moins une entrée latérale.

11. Procédé selon l'une quelconque des revendications précédentes, dans lequel ladite vapeur d'eau de purge est introduite dans ladite cuve de détente/séparation à une température s'échelonnant de 400 à 550°C (750 à 1025°F), à une pression manométrique totale s'échelonnant de 0 à 830 kPag (0 à 120 psig), et à un débit total de vapeur d'eau égal à 5 à 250 fois le volume de la cuve de détente/séparation.

12. Procédé selon la revendication 11, dans lequel ladite vapeur d'eau de purge est introduite dans ladite cuve de détente/séparation à une température s'échelonnant de 450 à 510°C (840 à 950°F), à une pression manométrique totale s'échelonnant de 350 à 700 kPag (de 50 à 120 psig), et à un débit total de vapeur d'eau égal à 100 à 200 fois le volume de la cuve de détente/séparation.

13. Procédé selon l'une quelconque des revendications précédentes, dans lequel la majeure partie dudit mélange air/vapeur d'eau est retirée de ladite cuve de détente/séparation sous forme de courant de tête et une partie mineure d'au moins 2% du mélange air/vapeur d'eau total est retirée de ladite cuve de détente/séparation sous forme de courant de fuite de queue.

14. Procédé selon la revendication 13, dans lequel ledit courant de fuite de queues représente de 5% à 10% du mélange air/vapeur d'eau total.

15. Procédé selon la revendication 13 ou 14, dans lequel la quantité dudit mélange air/vapeur d'eau retirée sous forme de courant de fuite de queues est régulée par une vanne associée à la sortie de fond.

16. Procédé selon la revendication 13, 14 ou 15, dans lequel la quantité dudit mélange air/vapeur d'eau retirée sous forme de courant de fuite de queues est régulée par un ou plusieurs orifices de restriction dans la tuyauterie associée à la sortie de fond.

17. Procédé selon l'une quelconque des revendications 13 à 16, dans lequel ledit mélange air/vapeur d'eau est introduit dans ladite cuve de détente/séparation dans des conditions suffisantes pour brûler le coke tout en limitant les températures adiabatiques de flamme à des valeurs de 570 à 615°C (1060 à 1140°F), la température de calcul de la tuyauterie pour ladite tuyauterie du courant de fuite de queues de la cuve de détente/séparation.

18. Procédé selon l'une quelconque des revendications précédentes, dans lequel le rapport pondéral air/vapeur d'eau du mélange air/vapeur d'eau est maintenu à pas plus de 0,2 pendant la décokéfaction.

19. Procédé selon l'une quelconque des revendications précédentes, dans lequel ledit rapport pondéral air/vapeur d'eau du mélange air/vapeur d'eau est maintenu à pas plus de 0,5 après l'élimination du coke dans le dispositif de détente/séparation.

20. Procédé selon l'une quelconque des revendications 17 à 19, qui comprend en outre le contrôle de température interne de la cuve de détente/séparation et la régulation dudit rapport pondéral air/vapeur d'eau en fonction de ladite température interne.

21. Procédé selon l'une quelconque des revendications précédentes, qui comprend en outre le contrôle de la température du courant de fuite de queues de la cuve de détente/séparation et la régulation dudit rapport pondéral air/vapeur d'eau en fonction de ladite température interne.

22. Procédé selon la revendication 21, dans lequel ledit contrôle est effectué au moyen d'un thermocouple superficiel fixé sur l'extérieur du fond de la cuve de détente/séparation ou de la tuyauterie située juste en aval de ladite cuve de détente/séparation.

23. Procédé selon la revendication 22, dans lequel ledit contrôle est effectué par analyse de CO/CO₂ dans le gaz d'échappement produit pendant la décokéfaction du mélange air/vapeur d'eau.

24. Procédé selon l'une quelconque des revendications précédentes, dans lequel le courant de purge et ou de décokéfaction comprend de la vapeur d'eau acide ou de la vapeur d'eau de procédé.

25. Appareil de craquage d'une charge d'alimentation d'hydrocarbures contenant un résidu et des précurseurs de coke, comprenant :
(a) une zone de chauffage permettant de chauffer ladite charge d'alimentation d'hydrocarbures pour obtenir une charge d'alimentation d'hydrocarbures chauffée ;
(b) une zone de mélange permettant de mélanger un courant de vapeur d'eau de dilution primaire avec ladite charge d'alimentation d'hydrocarbures chauffée pour obtenir un courant de mélange contenant des précurseurs de coke ;
(c) une cuve de détente/séparation permettant de détendre ledit courant de mélange pour former une phase vapeur appauvrie en précurseur de coke et une phase liquide riche en précurseur de coke, ladite cuve comprenant :
(i) une sortie de fond dans la cuve de détente/séparation qui comprend des surfaces internes et une tuyauterie de sortie associée, lesquelles surfaces et laquelle tuyauterie, au cours du fonctionnement, se recouvrant de ladite phase liquide et devenant après cela au moins partiellement cokéfiées ;
(ii) une sortie de tête permettant de retirer la phase vapeur et une trace de phase vapeur condensée, laquelle sortie de tête comprend des surfaces internes et une tuyauterie de sortie associée, lesquelles surfaces et laquelle tuyauterie, au cours du fonctionnement, se recouvrent de phase vapeur condensée et deviennent après cela au moins partiellement cokéfiées ;
(iii) une entrée permettant d'introduire suffisamment de vapeur d'eau de purge dans ladite cuve de détente/séparation pour retirer ladite phase vapeur de ladite cuve et ladite phase liquide desdites surfaces internes et/ou de ladite tuyauterie de sortie ; et
(iv) une entrée permettant d'introduire un mélange air/Vapeur d'eau à travers ladite cuve de détente/séparation dans des conditions suffisantes pour brûler au moins partiellement le coke sur lesdites surfaces internes et/ou ladite tuyauterie de sortie ;
(d) un four à pyrolyse comprenant une section de convexion, et une section de rayonnement permettant de craquer la phase vapeur pour produire un effluent comprenant des oléfines ;
(e) un dispositif permettant de tremper l'effluent ;
(f) un train de récupération permettant de récupérer le produit craqué dans l'effluent trempé ;
(g) un dispositif permettant de déterminer le niveau de cokéfaction dans ladite cuve de détente/séparation et/ou dans ladite tuyauterie de sortie associée ; et
(h) une vanne de régulation permettant de réguler la circulation de ladite charge d'alimentation d'hydrocarbures contenant un résidu et des précurseurs de coke vers ladite cuve de détente/séparation.

26. Appareil selon la revendication 25, dans lequel ladite cuve de détente/séparation comprend une chicane placée au-dessus de la sortie de liquide permettant d'empêcher que les queues liquides lourdes soient entraînées dans ladite phase vapeur.

27. Appareil selon la revendication 26, dans lequel ladite chicane est une chicane essentiellement conique dont le sommet est vers le haut.

28. Appareil selon la revendication 26 ou 27, dans lequel ladite chicane est une chicane perforée, essentiellement conique.

29. Appareil selon la revendication 26, 27 ou 28, dans lequel ladite chicane comprend des perforations constituant au moins 1% de sa superficie totale.

30. Appareil selon l'une quelconque des revendications 25 à 29, dans lequel ladite cuve de détente/séparation comprend en outre au moins une entrée latérale permettant d'introduire tangentiellement ledit courant de mélange.

31. Appareil selon l'une quelconque des revendications 25 à 30, dans lequel ladite cuve de détente/séparation contient un dispositif permettant de contrôler sa température interne.

32. Appareil selon l'une quelconque des revendications 25 à 31, qui comprend en outre un dispositif permettant de contrôler la température de la sortie au fond.

33. Appareil selon la revendication 32, dans lequel ledit dispositif de contrôle comprend un thermocouple superficiel fixé sur l'extérieur du fond de la cuve de détente/séparation ou de ladite tuyauterie de sortie située juste en aval de ladite cuve de détente/séparation.

34. Appareil selon la revendication 32 ou 33, qui comprend en outre un dispositif permettant de réguler le rapport pondéral air/vapeur d'eau dudit courant de mélange air/vapeur d'eau en fonction de ladite température interne et de ladite température de sortie au fond.
